# EUROPEAN PATENT SPECIFICATION

(11) **EP 0 663 799 B1**
(45) Date of publication and mention of the grant of the patent: **27.12.1996**
(21) Application number: 93922567.8
(22) Date of filing: 04.10.1993
(51) Int. Cl.: A23L 3/005

(54) **METHOD AND APPARATUS FOR STERILIZING SOLID FOODSTUFFS**
VERFAHREN UND VORRICHTUNG ZUM STERILISIEREN VON FESTEN NAHRUNGSMITTELN
PROCEDE ET APPAREIL POUR STERILISER DES PRODUITS ALIMENTAIRES SOLIDES

(30) Priority: 09.10.1992 EP 92309217
(43) Date of publication of application: 26.07.1995
(73) Proprietor: UNILEVER PLC, London EC4P 4BQ (GB); UNILEVER N.V., 3013 AL Rotterdam (NL)
(72) Inventor: ASSINDER, Ivar, Kempson, Bedfordshire MK42 7BD (GB)
(74) Representative: Eke, Philippa Dianne
(86) International application number: GB9302058
(87) International publication number: WO9408475

(56) References cited:
- WO-A-92/02150
- US-A- 3 398 251
- DATABASE WPIL Week 8941, Derwent Publications Ltd., London, GB; AN 89- 299510(41) &
- DATABASE WPIL Week 8718, Derwent Publications Ltd., London, GB; AN 87- 129402(18) &
- PATENT ABSTRACTS OF JAPAN vol. 10, no. 185 (C-357)(2241) 27 June 1986 &
- DATABASE WPIL Week 8638, Derwent Publications Ltd., London, GB; AN 86- 250286(38) &
- DEUTSCHE MOLKEREI-ZEITUNG - DMZ. vol. 110, no. 8, 23 February 1989, MUNCHEN DE pages 200 - 206 P.J.SKUDDER '"Fortschritte in der kontinuierlichen aseptischen Herstellung von Lebensmitteln mit dem Ohmic Heating-Verfahren"'

## Description

### Field of the invention

This invention relates generally to a method of and apparatus for food processing. More particularly, the invention relates to a method of and apparatus for processing a particular class of solid foodstuffs using a particular class of heating methods. In this specification and the appended claims the term "solid foodstuffs" is used to define foods containing water which do not have a flow capability, but whilst having a shape-defining structure contain or through a cooking process develop pathways enabling passage of a fluid from one part of the structure to another. Examples are chicken meat, courgettes and carrots. Additionally, the class of heating methods with which the invention is concerned is referred to in the specification and claims as a mass heating method, being a method in which the entire mass or the solid foodstuff (as hereinbefore defined) is subject to the effect of applied heat, as distinct from a method in which heat applied to the exterior is transmitted by conduction to the interior. Examples of mass heating methods are ohmic heating and microwave heating; retort heating is not an example of such a mass heating method.

### Background to the invention

A number of food processing methods comprise the steps of heating to an elevated temperature to effect cooking and/or sterilisation and then cooling prior to aseptic packaging. For any particular foodstuff, the maximum target temperature to be attained by heating, and generally held for a short period to achieve sterilisation, is quite critical, as it affects the quality of the finished product. Especially in the case of a solid foodstuff, it has proved very difficult with known methods to achieve the target temperature uniformly throughout the mass of the foodstuff, with the result that localised overcooking or undercooking occurs and/or the quality of the finished product is impaired.

### Prior Art

Patent Specification US-A-3398251 discloses a process in which a foodstuff is passed through a heated chamber wherein the presure is controllable. Normally, this pressure is set relatively high, independently of the nature of the foodstuff being processed.

Patent Specification WO-A-92/02150 relates to the baking of dough in an oven wherein the gas pressure can be raised to a relatively high value, typically by the addition of steam.

Document JP-B-61009162 discloses food processing apparatus in which the foodstuff is heated by ohmic heating within a chamber in which, for all foodstuffs, the pressure is set to a value exceeding the saturated vapour pressure of water at 100°C.

Document Deutsche Molkarie-Zeitung, Vol. 110, No. 8, pages 200-206 also discloses food processing apparatus in which the foodstuff is heated by ohmic heating, but without reference to pressure control.

In general, there is no disclosure in the prior art, in relation to food processing, of heating under pressure control related to specific foodstuffs being processed.

### The invention

According to one aspect of the invention there is provided a method of processing a solid foodstuff using a mass heating method, according to which the saturated vapour pressure of the foodstuff at a maximum target temperature is determined and, during at least part of the heating step, the environmental pressure of the foodstuff being heated is so controlled in relation to the determined saturated vapour pressure of the foodstuff as to achieve a substantially uniform temperature throughout the solid foodstuff at the maximum target temperature to be attained.

Ohmic heating and microwave heating are two examples of the mass heating method which may be employed, but these examples are not exhaustive.

In a preferred method, the heating step includes a major phase in which the temperature of the foodstuff is raised nominally to achieve the maximum target temperature and a holding phase in which the temperature of the foodstuff is held at the nominally attained meximum target temperature.

The environmental pressure during the major phase may be held constant or given a rising profile if appropriate so that uniform heating can be effected to a temperature in excess of 100 degrees C. During at least an initial part of the holding phase, when heating is maintained but optionally at reduced power, the environmental pressure is controlled to be equal to the saturated vapour pressure (SVP) of the water in the foodstuff at the maximum target temperature. It is at this time that, primarily due to transfer of water, transiently in the vapour phase, occurring from the hottest parts of the solid foodstuff (above the maximum target temperature) to the coolest parts (below the maximum target temperature), that all parts of the foodstuff are brought to the maximum target temperature. Subsequently, possibly with application of heat discontinued, the foodstuff may be held at the maximum target temperature to achieve a required effect such as sterilisation.

In practice, the environmental pressure may be kept substantially equal to the said SVP at the maximum target temperature throughout heating, or it may have an increasing value to be equal to the rising saturated vapour pressure of the water in the foodstuff as its temperature increases. Moreover, it is conceivable that an environmental pressure related to but slightly different from the saturated vapour pressure of the foodstuff, for example slightly higher than the SVP, may achieve an acceptable result.

A preferred method of heating is ohmic heating, in one procedure for which the foodstuff is immersed in a solution of an electrically conductive fluid, conveniently a saline solution, and an alternating voltage is applied between immersed electrodes. In some instances it may be possible to dispense with the conductive fluid and place the electrodes in direct contact with the foodstuff.

Subsequent to heating, a preferred method of cooling, for example prior to sterile packaging, is cooling by evaporation, achieved by applying a partial vacuum to the foodstuff (after separation from the saline solution). However, other possible methods of cooling are by use of chilled water or cryogens; the method of cooling is not directly related to the invention.

According to another aspect of the invention, there is provided apparatus for processing a foodstuff (as hereinbefore defined) by a mass heating method (as herein defined), characterised by a container for the foodstuff to be heated, means for heating the foodstuff in the container by a mass heating method in order nominally to raise the temperature of the solid to a maximum target temperature for which the saturated vapour pressure of the foodstuff has been predetermind, and means for controlling the pressure within the container during heating, in relation to the predetermined saturated vapour pressure of the foodstuff, to cause all parts of the solid foodstuff to attain the said maximum target temperature.

The container preferably accommodates a saline solution with immersed electrodes, and in use the foodstuff is immersed in the solution and an alternating voltage is applied to the electrodes to cause an electric current to pass through the solution and the foodstuff in order to heat the foodstuff (ohmic heating).

Preferably, the pressure control means comprises means firstly for maintaining a chosen fixed or varying pressure in the container throughout a major phase of heating during which the temperature of the foodstuff is raised nominally to attain the maximum target temperature and, secondly, for at least part of a holding phase during which the temperature of the foodstuff is held at the nominally attained maximum target temperature, for maintaining a pressure in the container substantially equal to the saturated vapour pressure (SVP) of the foodstuff at said critical maximum temperature.

### Description of embodiment

Processing method and apparatus in accordance with the invention, as practised in the laboratory, is exemplified in the following description, making reference to the accompanying drawings, in which:-
- Figure 1: shows a laboratory test rig for practising the method of the invention; and
- Figures 2 to 4: are graphs for demonstrating the results of the method when applied to three different solid foodstuffs.

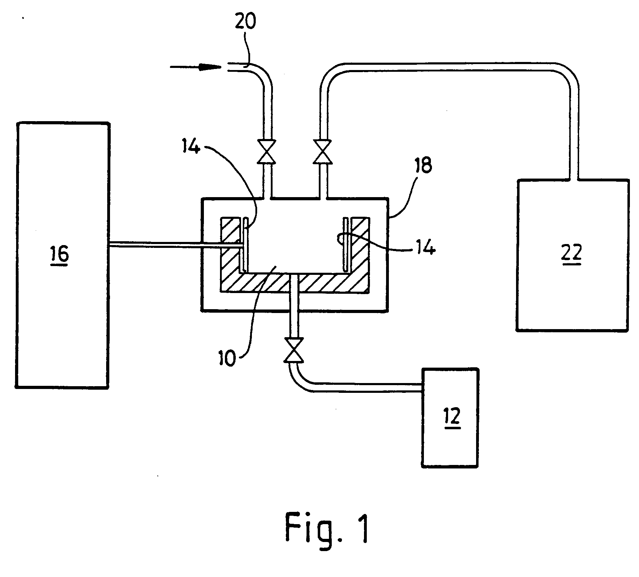

Figure 1 shows a laboratory test rig comprising a cell 10 of plastics material for accommodating the foodstuff (not shown) to be processed. The cell 10 can be filled with a conductive fluid solution, for example a saline solution, and accommodates electrodes 14, conveniently of titanium coated with platinum, which in use are immersed in the saline solution. Cell 10 can be emptied of saline solution into a vessel 12. A power supply 16 is able to apply an alternating voltage between the electrodes 14, in use to cause a current to flow through the solution, and through a solid foodstuff item immersed in the solution, in order to raise the temperature of the foodstuff by ohmic heating.

Other possible electrodes may for example be made of metal coated with platinum, titanium coated with iridium oxide or platinum iridium combinations, and other possible conductive solutions include potassium chloride, calcium chloride and sodium sulphate.

The ohmic heating cell 10 is housed in a pressure vessel 18, connected by line 20 to a source of compressed air (or other suitable gas) which can be modulated and also connected to a vacuum pump 22. By suitably adjusting the pressure in the vessel 18 and applying heating the temperature of the foodstuff being processed can be adjusted to values above or below 100 degrees C for example in the range 70 to 140 degrees C.

The voltage applied across the ohmic cell 10 is adjustable by a suitable device such as a Variac device or an automatic method; additionally, the concentration of the saline solution can be selected to suit requirements.

The food processing method in accordance with the invention was carried out, using the above-described apparatus, for three kinds of solid foodstuff, namely chicken breast, courgette and carrot.

The same method was employed in general terms for all three foodstuffs and this general method is first described.

Initially, the optimum concentration of saline solution required to give most uniform temperature distribution in the cell (and thus in the foodstuff) was determined. The method used was first to prepare a number of saline solutions of differing concentration (within the range 0.1 to 1.0%); then to insert several (at least five) thermocouples into different parts of the foodstuff to be heated, in order to measure temperatures in thin and thick parts and central as well as surface parts. The foodstuff was placed into the heating cell together with one of the prepared saline solutions and heating applied. The temperatures achieved were recorded and the experiment repeated for all the saline concentrations. By inspection of the temperature records for all the experiments it was possible to determine the approximate concentration of saline that gave the most uniform temperature distribution.

The above experiments were then repeated but using a narrower range of salt concentrations above and below the best concentration identified. In this way a succession of experiments enabled an accurate determination of the best saline concentration to use for the particular foodstuff.

Next, the saturated vapour pressure (SVP) of the foodstuff was determined at the intended maximum target temperature to be attained during the process. This SVP can be determined in various ways, but in the present case an iterative procedure was adopted by first setting the pressure in the vessel to be equal to the vapour pressure of water and observing the temperature achieved during heating. An adjustment was then made to the set pressure and the temperature achieved again observed. The iterations were repeated until the pressure was found which enabled the intended target temperature to be reached during heating.

The saline solution and foodstuff were then loaded into the heating cell, the cell placed in the pressure vessel and the pressure set to the SVP as previously determined.

Power was then switched on to effect heating at a desired rate, in order to bring the saline solution and the foodstuff nominally to the intended target temperature.

The heating step then has a holding phase in which the temperature of the foodstuff is maintained nominally at the target temperature, if appropriate by heating with reduced power. During the first part of the holding phase, it has been found that all parts of the product are brought substantially to the exact target temperature. The principal mechanism by which this occurs, apart from the continued heating, is that because the pressure vessel is set to the SVP (saturated vapour pressure of the water in the foodstuff at the target temperature), water transiently in the vapour phase migrates within the foodstuff from relatively hot regions (in excess of the target temperature) to relatively cool regions (below the target temperature).

When the whole of the foodstuff is equilibrated to the target temperature, the holding phase is continued to achieve a desired effect such as sterilisation. Heating during this time may be discontinued or maintained at reduced power.

On completion of the holding phase, power if any is switched off and the saline solution is ejected from the heating cell.

Cooling is then commenced by applying a partial vacuum to the foodstuff remaining in the cell and, when cooling by evaporation is complete, air is passed into the cell to restore ambient atmospheric pressure.

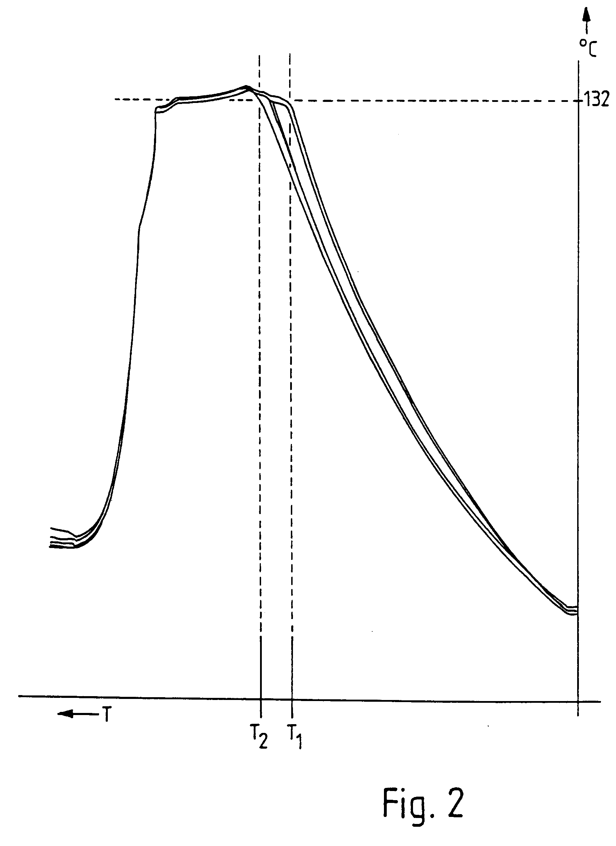

In the above-described method, thermocouples were implanted in various parts of the foodstuff to check the uniformity through the foodstuff of the target temperature achieved. The temperatures measured by five thermocouples implanted in the foodstuff are shown by the graphs of Figures 2 to 4, respectively in the case of chicken breast, courgette and carrot. Before describing these graphs, however, quantitative details of the method are given for the three examples in question.

In the case of whole chicken breast of 150 g weight, the optimum saline solution concentration was determined as 0.6 per cent. The SVP of the chicken breast at 132 degrees C was determined as 1.75 bar gauge. An alternating voltage at 50 Hz of 180 V was applied between the electrodes, causing current to flow through the saline solution and chicken breast fully immersed therein. When the last of the five thermocouples showed a temperature of 132 degrees C, power was switched off and the cell allowed to stand for 36 seconds. Saline solution was then ejected via a discharge valve. Then a vacuum of 0.5 bar absolute was applied to the cell to cause a rapid drop in temperature. Finally, the vacuum was disconnected and air allowed to enter the cell, enabling the pressure vessel to be opened and the heat processed chicken breast removed.

For courgette (3 cm long, 3.5 cm diameter), the only differences were that the optimum saline concentration was determined to be 0.15 per cent, whilst the applied alternating voltage was 400 V.

For carrot, the optimum saline concentration was determined to be 0.125 per cent and the applied voltage was 450 V. Other details were the same as for chicken breast. The carrot was in the form of five cubes of side 10 mm, and one thermocouple was implanted in each cube.

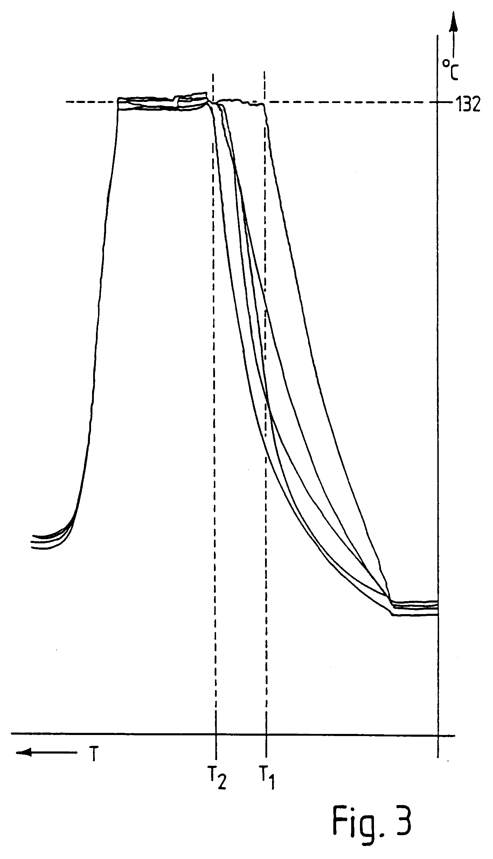

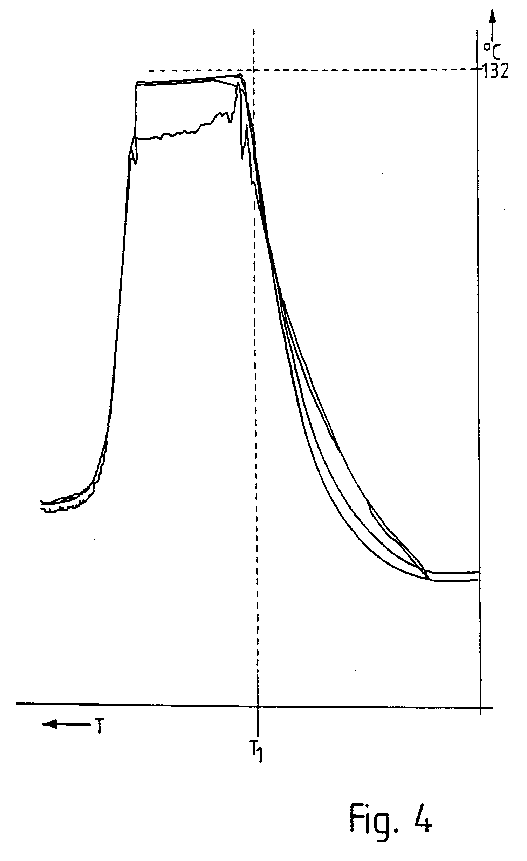

Referring now to Figures 2 to 4, the graph of Figure 2 relates to the chicken breast, Figure 3 to the courgette and Figure 4 to the carrot. Temperature in degrees C is indicated on the ordinate, and time T right to left on the abscissa.

In Figure 2, at time T₁ (approximately 110 seconds) corresponding to the beginning of the holding phase, the chicken breast is approaching the target temperature (132 degrees C) but there is a spread of about 15 degrees C over the five thermocouples. As power continues to be applied, the last thermocouple reaches the target temperature at time T₂, although the first four thermocouples to reach the target temperature have not risen substantially above it. Two of the thermocouples have been substantially at the target temperature for longer than two of the others. When power is switched off at time T₂, all five thermocouples remain at the exact target temperature for the rest of the holding phase prior to cooling.

In Figure 3, at time T₁, the beginning of the holding phase, there is a wide temperature divergence, of about 70 degrees C over the five thermocouples, but at time T₂ all five thermocouples have reached the target temperature and in general remain at this temperature for the remainder of the holding phase.

In Figure 4, there is less divergence in the temperatures but one thermocouple shows a major divergence after about time T₁. This thermocouple accidently detached from its carrot piece and is floating free in the headspace of the heating cell. Figure 4 shows the close control of temperatures possible using the method of the invention, in this case a temperature of 130 degrees C.

In general, in the above examples, there are some irregularities and inaccuracies, primarily due to difficulties in controlling the exact operating conditions, e.g. electrical power and pressure, in the manually operated test rig of Fig. 1. However, methods of automatic control which would overcome these deviations are readily available.

In the above examples, the pressure was set to the SVP of the water in the foodstuff, at the maximum target temperature, throughout heating and holding. However, it is considered, as a logical extension of the above described method, that lesser divergence in the temperatures of different parts of the foodstuff, during heating prior to holding, can be achieved if the pressure is adjusted during heating according to a rising profile so as to approximate to the increasing instantaneous SVP.

## Claims

1. A method of processing a solid foodstuff by a mass heating method characterised in that the saturated vapour pressure of the foodstuff at a maximum target temperature is determined and, during at least part of the heating step, the environmental pressure of the foodstuff being heated is so controlled in relation to the determined saturated vapour pressure of the foodstuff as to achieve a substantially uniform temperature throughout the solid foodstuff at the maximum target temperature to be attained.

2. A method according to claim 1, wherein the heating step includes a holding phase during which the foodstuff is held for a given period prior to cooling nominally at the maximum target temperature, characterised in that the environmental pressure is controlled during at least said holding phase to achieve the required substantially uniform temperature throughout the solid foodstuff.

3. A method according to claim 2, characterised in that the environmental pressure is kept constant during heating, at least prior to the holding phase.

4. A method according to claim 2 or claim 3, characterised in that, during at least part of the holding phase, the environmental pressure is maintained at least approximately at the saturated vapour pressure (SVP) of the water in the foodstuff at the maximum target temperature.

5. A method according to claim 4, characterised in that the environmental pressure is set equal to the said SVP throughout the heating step.

6. A method according to claim 4, characterised in that the environmental pressure is controlled to be approximately equal to the rising saturated vapour pressure of the foodstuff as the foodstuff is heated to rise to the maximum target temperature.

7. A method according to any of claims 2 to 6, characterised in that the holding phase includes a first part in which the environmental pressure is controlled to cause all parts of the solid foodstuff to achieve the maximum target temperature and a second part in which the foodstuff is uniformly held at the maximum target temperature to achieve a desired effect such as sterilisation.

8. A method accordingl to any of claims 1 to 7, characterised in that heating is effected by passing an electrical current through the solid (ohmic heating).

9. A method according to claim 8, characterised in that, to enable ohmic heating, the foodstuff is immersed in an electrically conductive fluid containing immersed electrodes (14).

10. A method according to claim 9, characterised in that the conductive fluid is a saline solution.

11. A method according to claim 9 or claim 10, characterised in that the concentration of the conductive fluid is selected to assist achievement of a uniform temperature distribution throughout the solid foodstuff.

12. A method according to claim 11, in which the ionic strength of the solution is selected by an iterative method in which heating and temperature measurement is carried out with differing concentrations of conductive fluid.

13. A method according to any of claims 7 to 12, characterised in that during heating the foodstuff is suspended in a cell (10) containing the conductive fluid and, after heating but prior to cooling, the conductive fluid is ejected from the cell.

14. A method according to claim 13, characterised in that cooling is effected by applying a partial vacuum to the cell (10) in order to effect cooling by evaporation.

15. Apparatus for processing a solid foodstuff by a mass heating method, characterised by a container (10) for foodstuff to be heated, means (14,16) for heating the foodstuff in the container by a mass heating method in order nominally to raised the temperature of the solid foodstuff to a maximum target temperature for which the saturated vapour pressure of the foodstuff has been predetermined, and means (18,20,22) for controlling the pressure within the container during heating, in relation to the predetermined saturated vapour pressure of the foodstuff, to cause all parts of the solid foodstuff to attain the said maximum target temperature.

16. Processing apparatus according to claim 15, characterised in that the container (10) accommodates a saline solution with immersed electrodes (14), and in use the foodstuff is immersed in the solution and an alternating voltage is applied to the electrodes to cause an electric current to pass through the solution and the foodstuff in order to heat the foodstuff (ohmic heating).

17. Processing apparatus according to claim 16, characterised in that the pressure control means (18,20,22) comprises means (18,20) firstly for maintaining a chosen fixed or varying pressure in the container (10) throughout a major phase of heating during which the temperature of the foodstuff is raised nominally to attain the maximum target temperature and, secondly, for at least part of a holding phase during which the temperature of the foodstuff is held at the nominally attained maximum target temperature, for maintaining a pressure in the container substantially equal to the saturated vapour pressure (SVP) of the foodstuff at said critical maximum temperature.

18. Processing apparatus according to claim 17, characterised in that the pressure control means (18,20,22) comprises means (18,20) for maintaining the pressure in the container (10) substantially equal to the said SVP throughout heating.

19. Processing apparatus according to claim 17 or claim 18, in which the pressure control means (18,20,22) also comprises means (22), operative after completion of the holding phase and ejection of the saline solution from the container (10), for applying a partial vacuum to the container in order to cool the foodstuff by evaporation.

## Patentansprüche

1. Verfahren zur Behandlung eines festen Nahrungsmittels unter Verwendung eines Massenerhitzungsverfahrens, dadurch gekennzeichnet, daß der Sättigungsdampfdruck des Nahrungsmittels bei einer maximalen Zieltemperatur bestimmt wird und während zumindest eines Teils des Erhitzungsschritts der Umgebungsdruck des Nahrungsmittels, das erhitzt wird, so in bezug auf den bestimmten Sättigungsdampfdruck des Nahrungsmittels geregelt wird, daß im gesamten festen Nahrungsmittel eine im wesentlichen gleichmäßige Temperatur bei der zu erlangenden maximalen Zieltemperatur erreicht wird.

2. Verfahren nach Anspruch 1, wobei der Erhitzungsschritt eine Haltephase mit einschließt, während welcher das Nahrungsmittel eine bestimmte Zeit lang vor einem Abkühlen nominell auf der maximalen Zieltemperatur gehalten wird, dadurch gekennzeichnet, daß der Umgebungsdruck während zumindest der Haltephase geregelt wird, um die nötige, im wesentlichen gleichmäßige Temperatur im gesamten festen Nahrungsmittel zu erreichen.

3. Verfahren nach Anspruch 2, dadurch gekennzeichnet, daß der Umgebungsdruck während der Erhitzens, zumindest vor der Haltephase, konstant gehalten wird.

4. Verfahren nach Anspruch 2 oder 3, dadurch gekennzeichnet, daß zumindest während eines Teiles der Haltephase der Umgebungsdruck auf etwa dem Sättigungsdampfdruck (SVP) des im Nahrungsmittel vorhandenen Wassers bei der maximalen Zieltemperatur gehalten wird.

5. Verfahren nach Anspruch 4, dadurch gekennzeichnet, daß der Umgebungsdruck so eingestellt wird, daß er gleich dem SVP während des gesamten Erhitzungsschrittes ist.

6. Verfahren nach Anspruch 4, dadurch gekennzeichnet, daß der Umgebungsdruck so geregelt wird, das er etwa gleich dem steigenden Sättigungsdampfdruck des Nahrungsmittels ist, während das Nahrungsmittel erhitzt wird, um auf die maximale Zieltemperatur anzusteigen.

7. Verfahren nach einem der Ansprüche 2 bis 6, dadurch gekennzeichnet, daß die Haltephase einen ersten Teil beinhaltet, in welchem der Umgebungsdruck geregelt wird, um zu bewirken, daß alle Teile de festen Nahrungsmittels die maximale Zieltemperatur erreichen, und einen zweiten Teil, in welchem das Nahrungsmittel gleichmäßig auf der maximalen Zieltemperatur gehalten wird, um einen gewünschten Effekt, wie Sterilisation, zu erreichen.

8. Verfahren nach einem der Ansprüche 1 bis 7, dadurch gekennzeichnet, daß das Erhitzen durch Hindurchleiten eines elektrischen Stroms durch den Feststoff bewirkt wird (Ohmsches Erhitzen).

9. Verfahren nach Anspruch 8, dadurch gekennzeichnet, daß das Nahrungsmittel zwecks Ermöglichung des Ohmschen Erhitzens in ein elektrisch leitfähiges Fluid, welches eingetauchte Elektroden (14) enthält, eingetaucht wird.

10. Verfahren nach Anspruch 9, dadurch gekennzeichnet, daß das leitfähige Fluid eine Kochsalzlösung ist.

11. Verfahren nach Anspruch 9 oder 10, dadurch gekennzeichnet, daß die Konzentration des leitfähigen Fluids so gewählt wird, daß das Erreichen einer gleichmäßigen Temperaturverteilung im gesamten Nahrungsmittel gefördert wird.

12. Verfahren nach Anspruch 11, bei welchem die Ionenstärke der Lösung durch ein iteratives Verfahren ausgewählt wird, bei welchem Erhitzen und Temperaturmessung mit verschiedenen Konzentrationen von leitfähigem Fluid durchgeführt werden.

13. Verfahren nach einem der Ansprüche 7 bis 12, dadurch gekennzeichnet, daß das Nahrungsmittel während des Erhitzens in einer Zelle (10) suspendiert wird, die das leitfähige Fluid enthält, und das leitfähige Fluid nach dem Erhitzen, jedoch vor dem Abkühlen, aus der Zelle entleert wird.

14. Verfahren nach Anspruch 13, dadurch gekennzeichnet, daß das Abkühlen durch Anlegen eines Teilvakuums an die Zelle (10) bewirkt wird, um das Abkühlen durch Verdampfen zu bewirken.

15. Vorrichtung zur Behandlung eines festen Nahrungsmittels durch ein Massenerhitzungsverfahren, gekennzeichnet durch einen Behälter (10) für ein zu erhitzendes Nahrungsmittel, Mittel (14, 16) zum Erhitzen des Nahrungsmittels im Behälter durch ein Massenerhitzungsverfahren, um die Temperatur des festen Nahrungsmittels nominell auf eine maximale Zieltemperatur zu erhöhen, für welche der Sättigungsdampfdruck des Nahrungsmittels vorbestimmt worden ist, und Mittel (18, 20, 22) zur Regelung des Drucks innerhalb des Behälters während des Erhitzens in Relation zum vorbestimmten Sättigungsdampfdruck des Nahrungsmittels, um zu bewirken, daß alle Teile des festen Nahrungsmittels die maximale Zieltemperatur erreichen.

16. Behandlungsvorrichtung nach Anspruch 15, dadurch gekennzeichnet, daß der Behälter (10) eine Kochsalzlösung mit eingetauchten Elektroden (14) aufnimmt und bei Verwendung das Nahrungsmittel in der Lösung eingetaucht ist und eine Wechselspannung an die Elektroden angelegt ist, um zu bewirken, daß ein elektrischer Strom durch die Lösung und das Nahrungsmittel hindurchgeht, damit das Nahrungsmittel erhitzt wird (Ohmsches Erhitzen).

17. Behandlungsvorrichtung nach Anspruch 16, dadurch gekennzeichnet, daß die Druckregelmittel (18, 20, 22) Mittel (18, 20) aufweisen, um erstens einen gewählten feststehenden oder veränderlichen Druck im Behälter (10) während einer Hauptphase aufrechtzuerhalten, während welcher die Temperatur des Nahrungsmittels nominell erhöht wird, um die maximale Zieltemperatur zu erreichen, und um zweitens während mindestens eines Teils einer Haltephase, während welcher die Temperatur des Nahrungsmittels auf der nominell erreichten maximalen Zieltemperatur gehalten wird, einen Druck im Behälter aufrechtzuerhalten, der im wesentlichen gleich dem Sättigungsdampfdruck (SVP) des Nahrungsmittels bei dieser kritischen Höchsttemperatur ist.

18. Behandlungsvorrichtung nach Anspruch 17, dadurch gekennzeichnet, daß die Druckregelmittel (18, 20, 22) Mittel (18, 20) aufweisen, um den Druck im Behälter (10) während des gesamten Erhitzens im wesentlichen gleich dem SVP zu halten.

19. Behandlungsvorrichtung nach Anspruch 17 oder 18, worin die Druckregelmittel (18, 20, 22) auch Mittel (22) aufweisen, die nach der Beendigung der Haltephase und dem Entleeren der Kochsalzlösung aus dem Behälter (10) wirksam werden, um an den Behälter ein Teilvakuum anzulegen, um das Nahrungsmittel durch Verdampfen abzukühlen.

## Revendications

1. Procédé de traitement d'un aliment solide par un procédé de chauffage en masse caractérisé en ce que l'on détermine la pression de vapeur saturée de l'aliment à une température visée maximale et, pendant au moins une partie de l'étape de chauffage, on règle la pression de l'environnement de l'aliment traité par rapport à la pression de vapeur saturée déterminée de l'aliment de façon à établir une température sensiblement uniforme dans tout l'aliment solide à la température visée maximale à atteindre.

2. Procédé selon la revendication 1, dans lequel l'étape de chauffage inclut une phase de maintien pendant laquelle on maintient l'aliment nominalement à la température visée maximale pendant une durée donnée avant de le refroidir, caractérisé en ce que l'on règle la pression de l'environnement pendant au moins ladite phase de maintien pour atteindre la température sensiblement uniforme nécessaire dans tout l'aliment solide.

3. Procédé selon la revendication 2, caractérisé en ce que l'on maintient la pression de l'environnement constante pendant le chauffage, au moins avant la phase de maintien.

4. Procédé selon la revendication 2 ou 3, caractérisé en ce que, pendant au moins une partie de la phase de maintien, on maintient la pression de l'environnement au moins approximativement à la pression de vapeur saturée (SVP) de l'eau dans l'aliment à la température visée maximale.

5. Procédé selon la revendication 4, caractérisé en ce qu'on égale la pression de l'environnement à ladite SVP pendant toute l'étape de chauffage.

6. Procédé selon la revendication 4, caractérisé en ce que l'on règle la pression de l'environnement pour qu'elle soit approximativement égale à la pression de vapeur saturée croissante de l'aliment au fur et à mesure que l'on chauffe l'aliment pour élever sa température à la température visée maximale.

7. Procédé selon l'une quelconque des revendications 2 à 6, caractérisé en ce que la phase de maintien comprend une première partie pendant laquelle on règle la pression de l'environnement pour faire en sorte que toutes les parties de l'aliment solide atteignent la température visée maximale et une deuxième partie pendant laquelle on maintient uniformément l'aliment à la température visée maximale pour réaliser un effet souhaité tel qu'une stérilisation.

8. Procédé selon l'une quelconque des revendications 1 à 7, caractérisé en ce que le chauffage est réalisé en faisant passer un courant électrique à travers le solide (chauffage par effet Joule).

9. Procédé selon la revendication 8, caractérisé en ce que, pour permettre le chauffage par effet Joule, l'aliment est immergé dans un fluide électriquement conducteur contenant des électrodes immergées (14).

10. Procédé selon la revendication 9, caractérisé en ce que le fluide conducteur est une solution saline.

11. Procédé selon la revendication 9 ou 10, caractérisé en ce que la concentration du fluide conducteur est choisie pour aider à l'établissement d'une distribution de température uniforme dans tout l'aliment solide.

12. Procédé selon la revendication 11, dans lequel la force ionique de la solution est choisie par un procédé itératif dans lequel on effectue la mesure du chauffage et de la température avec différentes concentrations de fluide conducteur.

13. Procédé selon l'une quelconque des revendications 7 à 12, caractérisé en ce que pendant le chauffage l'aliment est en suspension dans une cellule (10) contenant le fluide conducteur et, après chauffage mais avant refroidissement, le fluide conducteur est éjecté de la cellule.

14. Procédé selon la revendication 13, caractérisé en ce que le refroidissement est réalisé en appliquant un vide partiel à la cellule (10) afin de réaliser le refroidissement par évaporation.

15. Appareil pour traiter un aliment solide par un procédé de chauffage en masse, caractérisé par un récipient (10) pour l'aliment à chauffer, un moyen (14, 16) pour chauffer l'aliment dans le récipient à l'aide d'un procédé de chauffage en masse afin d'élever nominalement la température de l'aliment solide à une température visée maximale pour laquelle on a prédéterminé la pression de vapeur saturée de l'aliment, et un moyen (18, 20, 22) pour régler la pression dans le récipient pendant le chauffage, par rapport à la pression de vapeur saturée prédéterminée de l'aliment, pour faire en sorte que toutes les parties de l'aliment solide atteignent ladite température visés maximale.

16. Appareil de traitement selon la revendication 15, caractérisé en ce que le récipient (10) contient une solution saline avec des électrodes immergées (14), et en utilisation l'aliment est immergé dans la solution et on applique une tension alternative aux électrodes pour faire passer un courant électrique à travers la solution et l'aliment afin de chauffer l'aliment (chauffage par effet Joule).

17. Appareil de traitement selon la revendication 16, caractérisé en ce que le moyen de réglage de la pression (18, 20, 22) comprend un moyen (18, 20) d'abord pour maintenir une pression fixe ou variable choisie dans le récipient (10) pendant toute une phase importante de chauffage pendant laquelle on élève nominalement la température de l'aliment pour atteindre la température visée maximale et, deuxièmement, pendant au moins une partie d'une phase de maintien pendant laquelle on maintient la température de l'aliment à la température visée maximale nominalement atteinte, pour maintenir une pression dans le récipient sensiblement égale à la pression de vapeur saturée (SVP) de l'aliment à ladite température maximale critique.

18. Appareil de traitement selon la revendication 17, caractérisé en ce que le moyen de réglage de la pression (18, 20, 22) comprend un moyen (18, 20) pour maintenir la pression dans le récipient (10) sensiblement égale à ladite SVP pendant le chauffage.

19. Appareil de traitement selon la revendication 17 ou 18, dans lequel le moyen de réglage de la pression (18, 20, 22) comprend également un moyen (22), opérant après achèvement de la phase de maintien et l'expulsion de la solution saline du récipient (10), pour appliquer un vide partiel au récipient afin de refroidir l'aliment par évaporation.
